# EUROPÄISCHE PATENTSCHRIFT

(11) **EP 1 059 765 B1**
(45) Veröffentlichungstag und Bekanntmachung des Hinweises auf die Patenterteilung: **14.07.2010**
(21) Anmeldenummer: 00111632.6
(22) Anmeldetag: 31.05.2000
(51) Int. Cl.: H04L 12/24, H04L 12/26

(54) **Vorrichtung und Verfahren für die Fehlersuche in einer Telekommunikationsanlage**
Device and method for searching errors in a telekommunikation apparatus
Dispositif et méthode pour la recherche d'erreurs dans un appareil de télécommunication

(30) Priorität: 10.06.1999 DE 19926436
(43) Veröffentlichungstag der Anmeldung: 13.12.2000
(73) Patentinhaber: Tenovis GmbH & Co. KG, 60362 Frankfurt (DE)
(72) Erfinder: Maldener, Nico-Johannes, 66957 Ruppertsweiler (DE); Bosse, Carsten, 71638 Ludwigsburg (DE)
(74) Vertreter: Walkenhorst, Andreas

(56) Entgegenhaltungen:
- EP-A- 0 849 910
- US-A- 5 726 979
- US-A- 5 751 965
- US-A- 5 841 981

## Beschreibung

### Stand der Technik

Die vorliegende Erfindung betrifft eine Vorrichtung und ein Verfahren, die zur Unterstützung der Fehlersuche in einer Telekommunikationsanlage einsetzbar sind.

Es sind Vorrichtungen zu diesem Zweck bekannt, die Mittel zum Erfassen von Verbindungsdaten der Telekommunikationsanlage in der zeitlichen Abfolge ihrer Entstehung sowie Mittel zum Anzeigen der erfaßten Verbindungsdaten aufweisen. Eine solche Vorrichtung kann zum Beispiel in Form eines Speicherbausteins der Telekommunikationsanlage, in dem die betreffenden Daten gesammelt werden, und eines an die Telekommunikationsanlage angeschlossenen Drukkers implementiert sein, der bei Bedarf sämtliche in dem Speicherbaustein gesammelten Meldungen betreffend Verbindungen, interne Signalisierung, etc. der Telekommunikationsanlage in der Reihenfolge ihrer Entstehung ausdruckt. Die Auswertung einer derartigen Liste auf der Suche nach der Ursache eines Verbindungsfehlers ist äußerst aufwendig. Komfortablere Lösungen sehen deshalb die Erfassung von Verbindungsdaten mit Hilfe eines Computers vor, der es zumindest erlaubt, aus der Vielzahl von vorhandenen Meldungen diejenigen herauszufiltern, die Verbindungen zu einem bestimmten Endgerät oder eine bestimmte, durch eine als Call-Reference (CR) oder Transaction Number bezeichnete Verbindungsnummer identifizierte Verbindung betreffen. Eine derartige Vorrichtung ist beispielsweise aus der US-A-5726979 bekannt.

Eine derartige Vorrichtung erleichtert zwar die gezielte Suche nach Informationen über eine Verbindung beziehungsweise ein Endgerät, an dem ein Fehler aufgetreten ist; häufig ist die Ursache eines Fehlers jedoch im Zusammenwirken verschiedener Endgeräte der Telekommunikationsanlage zu suchen, und eine solche Zusammenwirkung zu erkennen ist für einen Benutzer einer solchen Vorrichtung auch anhand von gefilterten Verbindungsinformationen nicht ohne Schwierigkeiten möglich.

### Vorteile der Erfindung

Durch die Erfindung wird eine Vorrichtung beziehungsweise ein Verfahren zur Unterstützung der Fehlersuche in einer Telekommunikationsanlage geschaffen, die einem Benutzer eine bequeme visuelle Erfassung der Verbindungen einzelner Anschlussorgane einer Telekommunikationsanlage und ihres zeitlichen Zusammenspiels mit Verbindungen zu weiteren Anschlussorganen ermöglicht. Unter einem Anschlussorgan wird dabei ein beliebiges Endgerät der Telekommunikationsanlage, also ein herkömmliches Telefon- oder Faxgerät, ein Vermittlungsplatz, eine Leitung zu einem externen Fernmeldenetz oder allgemein eine Schnittstelle der Telekommunikationsanlage, über die eine Übertragungsverbindung nach aussen herstellbar ist, verstanden.

Bei der erfindungsgemässen Vorrichtung sind die Mittel zum Anzeigen eingerichtet graphische Symbole, die zu Verbindungen eines gleichen Anschlussorgans der Telekommunikationsanlage gehören, in einer ersten örtlichen Beziehung zueinander sowie zeitgleiche Verbindungen verschiedener Anschlussorgane in einer zweiten örtlichen Beziehung zueinander auf einer Anzeigefläche darzustellen. Diese Anzeigefläche kann ein von einem Drucker mit den graphischen Symbolen bedrucktes Blatt Papier sein, bevorzugterweise ist die Anzeigefläche allerdings ein Bildschirm.

Vorzugsweise ist die Anzeigefläche in Streifen unterteilt, wobei jeder Streifen jeweils der Darstellung von Verbindungen eines bestimmten Anschlussorgans vorbehalten ist. Die Position des graphischen Symbols einer Verbindung in Längsrichtung des Streifens wird in Abhängigkeit von der Zeit des Bestehens der Verbindung festgelegt; die Längsrichtung des Streifens entspricht somit einer Zeitachse, entlang derer die Symbole in zeitlicher Reihenfolge aufeinanderfolgen.

Vorzugsweise wird auch die Abmessung jedes graphischen Symbols in Längsrichtung des Streifens proportional zur Dauer der Verbindung festgelegt. So kann ein Betrachter der Anzeigefläche zeitliche Überschneidungen und Koinzidenzen von Verbindungen verschiedener Anschlußorgane mühelos erkennen.

Um die Abfrage sämtlicher zu einer Verbindung gespeicherter Informationen zu ermöglichen, verfügt die Vorrichtung vorzugsweise über Eingabemittel, die es einem Benutzer ermöglichen, das Symbol einer Verbindung zu selektieren, zu der nachfolgend die gespeicherten Informationen angezeigt werden sollen.

Weitere Merkmale und Vorteile der Erfindung ergeben sich aus der nachfolgenden Beschreibung eines Ausführungsbeispiels mit Bezug auf die Figuren.

### Figuren

- Figur 1: zeigt eine beispielhafte Ausgestaltung einer Vorrichtung zur Unterstützung der Fehlersuche gemäß der vorliegenden Erfindung;
- Figur 2: zeigt ein Beispiel für die Darstellung von Verbindungen auf dem Bildschirm der Vorrichtung aus Figur 1; und
- Figur 3: zeigt ein zweites Beispiel für die Darstellung von Verbindungen.

### Beschreibung des Ausführungsbeispiels

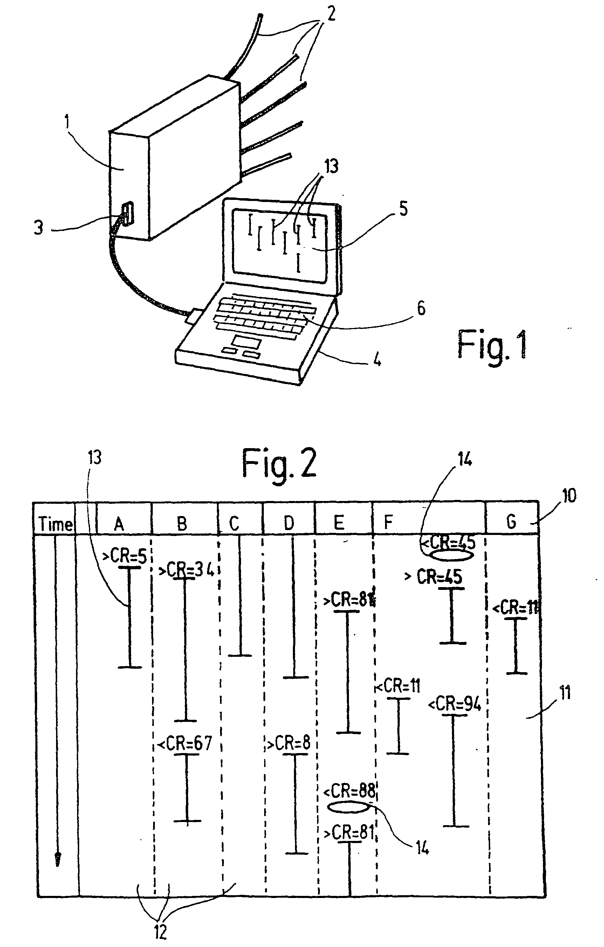

Figur 1 stellt beispielhaft eine konkrete Ausgestaltung einer Vorrichtung zur Unterstützung der Fehlersuche in einer Telekommunikationsanlage dar. Die Telekommunikationsanlage 1 ist hier als ein geschlossener Kasten mit einer Mehrzahl von Leitungen 2 dargestellt, die jeweils zu Anschlußorgan führen. Der innere Aufbau der Telekommunikationsanlage 1 ist für die vorliegende Erfindung nur insoweit von Bedeutung, daß die Telekommunikationsanlage in der Lage sein muß, Signalisierungsmeldungen, die zwischen ihr und Anschlußorganen über die Leitungen 2 ausgetauscht worden sind, zu sammeln und über eine Schnittstelle 3 für eine Fehlersuchvorrichtung verfügbar zu machen. Die Bereitstellung der Signalisierungsmeldungen an der Schnittstelle 3 kann in Echtzeit, entsprechend ihrer Entstehung, erfolgen; es kann aber auch ein Speicherbaustein in der Telekommunikationsanlage 1 vorgesehen sein, in dem diese Meldungen abgespeichert und zum Abruf durch eine Fehlersuchvorrichtung bereitgehalten werden.

Die Fehlersuchvorrichtung hat beim vorliegenden Beispiel die Form eines tragbaren Computers 4, der geeignet programmiert ist, um die Signalisierungsmeldungen, die in der Telekommunikationsanlage 1 erzeugt werden, aus dem Speicherbaustein abzufragen, Meldungen, die jeweils zu einer gleichen Verbindung gehören, zusammenzufassen, und eine Verbindung auf seinem Bildschirm 5 in Form eines graphischen Symbols darzustellen.

Ein typisches Beispiel für die Darstellung von Verbindungen auf dem Bildschirm 5 ist in Figur 2 dargestellt. In einem oberen Randstreifen 10 des Bildschirms sind Bezeichnungen, hier Buchstaben A bis G von verschiedenen mit der Telekommunikationsanlage verbundenen Anschlußorganen angegeben. Jedem Anschlußorgan ist ein Streifen 12 eines Hauptbereichs 11 des Bildschirms zugeordnet. Die einzelnen Streifen 12 sind in der Figur der besseren Erkennbarkeit wegen durch gestrichelte Linien voneinander abgesetzt; derartige Linien müssen aber in der Praxis auf dem Bildschirm 5 nicht sichtbar sein. Den linken Rand des Bildschirms bildet eine Zeitskala, an der (in der Figur nicht gezeigte) Datums- und Uhrzeitangaben aufgetragen sein können.

Die Signalisierungsmeldungen, die der Computer 4 aus der Telekommunikationsanlage ausliest, sind jeweils einem Anschlußorgan zugeordnet. Innerhalb der Menge der Signalisierungsmeldungen eines Anschlußorgans bildet der Computer Verbindungsobjekte, in denen sämtliche Meldungen mit einer gleichen Call-Reference-Nummer, das heißt alle auf eine einzelne Verbindung bezogenen Meldungen, zusammengefaßt sind/werden. Aus diesen Meldungen wird Anfangs- und Endzeitpunkt der Verbindung berechnet, und die Verbindung wird in dem dem zugehörigen Verbindungsorgan entsprechenden streifen 12 als ein graphisches Symbol 13 dargestellt, dessen Anfangs- und Endpunkt auf dem Bildschirm jeweils Anfangs- und Endzeitpunkt der Verbindung entsprechen. Benachbart zu dem graphischen Symbol 13 wird die Transaktions- oder Call-Reference-Nummer der Verbindung dargestellt.

Weitere Symbole 14, die sich in ihrer Gestalt von den Symbolen 13 unterscheiden, betreffen Signalisierungsvorgänge, die nicht von einer Verbindung abhängig sind.

Durch Anwählen eines Symbols 13 oder 14 mit Hilfe eines Cursors oder Eingabe der Call-Reference-Nummer über die Tastatur 6 des Computers 4 kann ein Benutzer eine Verbindung oder einen verbindungslosen Signalisierungsvorgang auswählen, zu der er sämtliche verfügbaren Daten, also das gesamte Verbindungsobjekt, angezeigt haben möchte. Die Anzeige der vollständigen Daten des Verbindungsobjekts kann auf dem Bildschirm 5 in Textform erfolgen.

Dabei werden nicht nur solche Meldungen angezeigt, die direkt auf die selektierte Verbindung bezogen sind, sondern auch, sofern vorhanden, nichtverbindungsabhängige Meldungen, die während der Lebenszeit des Verbindungsobjekts an das entsprechende Endgerät geschickt worden sind, da diese für die Analyse der Verbindung unter Umständen wichtig sind. Solche verbindungsunabhängigen Meldungen beinhalten zum Beispiel Signalisierungsinformationen über andere Anschlußorgane, wie etwa eine Information über einen Besetzt- oder Freizustand einer Amtsleitung oder eines Endgeräts; Konfigurierungsinformationen, die zwischen der Telekommunikationsanlage und Endgeräten ausgetauscht werden, um letztere zu konfigurieren, beispielsweise durch Programmierung einer Anrufweiterschaltung oder dergleichen, sowie allgemeine Informationen wie zum Beispiel Datum und Uhrzeit.

Verbindungsbezogene Meldungen können außer dem Anfangs- und Endzeitpunkt einer Verbindung, die für die Berechnung des die Verbindung darstellenden Symbols 13 erforderlich sind, noch weitere Informationen wie zum Beispiel der Grund des Abbruchs der Verbindung, eine Anrufernummer oder gegebenenfalls einen von der Telekommunikationsanlage zu der Anrufernummer in einer Datenbank identifizierten Namen, Informationen über einen Anklopfvorgang oder eine Weitervermittlung des Gesprächs an ein zweites Anschlußorgan enthalten.

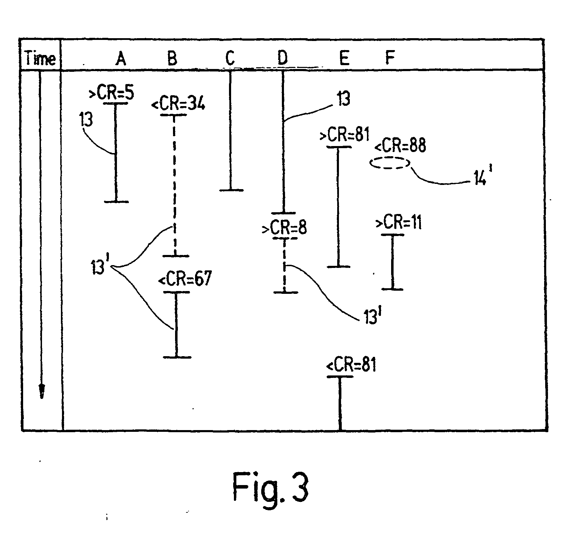

Insbesondere anhand des letzteren Typs von Information ist es für den Computer möglich, Gespräche zu erkennen, die in einem kausalen Zusammenhang stehen und diese in der Darstellung auf dem Bildschirm dadurch hervorzuheben, daß die graphischen Symbole von kausal zusammenhängenden Verbindungen jeweils mit einem gemeinsamen Merkmal, beispielsweise einer einheitlichen, von anderen Symbolen unterschiedlichen Farbe oder mit einem besonderen Linienmuster dargestellt werden. Ein Beispiel hierfür ist in Figur 3 gezeigt. Hier sind die Verbindungen mit den Call-Reference-Nummern 34,38,8 und 67 dadurch als zusammengehörig gekennzeichnet, daß ihre Symbole 13',14' mit gestrichelten Linien dargestellt sind. Für einen Benutzer der Vorrichtung wird so bei Betrachtung der Anzeige von Figur 3 intuitiv klar, daß zwischen den gestrichelt dargestellten Verbindungen ein Sachzusammenhang besteht, und sofern eine dieser Verbindungen zu einer Störung der Anlage geführt hat, wird er alle diese Verbindungen auswählen und sich deren Signalisierungsmeldungen vollständig anzeigen lassen. Auf diese Weise kann der Benutzer beispielsweise in kürzester Zeit rekonstruieren, daß die früheste der Verbindungen, mit der CR-Nummer 34, auf einen externen Anruf bei dem Endgerät B zurückgeht, dessen Bezeichnung in dem Randbereich 10 oberhalb des Verbindungssymbols angegeben ist. Die Tatsache, daß durch dieses Gespräch eine Amtsleitung belegt worden ist, ist dem Endgerät F durch die Meldung mit der CR-Nummer 88 signalisiert worden. Da dieser Meldung keine eigene Verbindung zugeordnet ist, stellt der Computer sie mit einem Symbol 14' dar, dessen Gestalt sich von der der Symbole 13 unterscheidet, die auf eine Verbindung bezogen sind. Aus den Angaben zur Verbindung mit der Call-Reference-Nummer 34 ist ferner entnehmbar, daß der Benutzer des Endgeräts B Rücksprache mit einem Benutzer eines weiteren Endgeräts D gehalten hat. Zu diesem Zweck ist von der Vermittlungsanlage die Verbindung mit Callreference-Nummer 8 eingerichtet worden. Wenig später hat der Benutzer des Endgeräts B die Verbindung mit der CR-Nummer 34 beendet.

Um den Zusammenhang der Gespräche weiter zu untersuchen, kann der Benutzer der erfindungsgemäßen Vorrichtung nun das Verbindungsobjekt CR=8 selektieren, und sich die hierzu gespeicherten Meldungen anzeigen lassen. Aus diesen ergibt sich dann beispielsweise im Fall der in Figur 3 gezeigten Situation, daß der Benutzer des Endgeräts D den externen Anruf vom dem Endgerät B übernommen und eine Zeitlang weitergeführt hat. Schließlich hat er eine neue Verbindung zum Endgerät B mit der CR-Nummer 67 aufgebaut und den externen Anruf an dieses Endgerät zurückübergeben.

Wie man leicht erkennt, wird durch die in den Figuren 2 und 3 beispielhaft dargestellte Darstellung von Verbindungsereignissen eine leichte Nachverfolgung auch von komplexen Vermittlungsvorgängen innerhalb einer Anlage leicht möglich, und die Suche nach kausalen Zusammenhängen, die zu einer Vermittlungsstörung geführt haben könnten, ist erheblich vereinfacht.

Im Rahmen der vorliegenden Erfindung ist unter einer Verbindung nicht nur das tatsächliche Zustandekommen einer Sprach- oder Datenübertragung zu verstehen. Auch der Versuch, eine solche Übertragung herbeizuführen, wird als Verbindung aufgefaßt, und die mit diesem Versuch zusammenhängenden Signalisierungsmeldungen sollen von der Telekommunikationsanlage der erfindungsgemäßen Vorrichtung zur Verfügung gestellt werden. Wenn auch derartige Versuche von der Telekommnunikationsanlage protokolliert und zur Verfügung gestellt werden, läßt sich mit Hilfe der erfindungsgemäßen Vorrichtung ein wesentlich genaueres Bild über den Auslastungsgrad der Anlage zu verschiedenen Zeitpunkten und infolgedessen zusätzliche Information über Fehler gewinnen, deren Auftreten sonst nicht mit einem bestimmten Ereignis im Laufe einer bestehenden Sprach-oder Datenübertragung in Zusammenhang gebracht werden kann.

## Patentansprüche

1. Vorrichtung zur Unterstützung der Fehlersuche in einer Telekommunikationsanlage, mit Mitteln zum Erfassen von Verbindungsdaten der Telekommunikationsanlage und Mitteln zum Anzeigen der erfassten Verbindungsdaten, wobei die Mittel zum Anzeigen (4) eingerichtet sind, Verbindungsdaten, die zu einer gleichen Verbindung gehören, zu einem einheitlichen graphischen Symbol (13) zusammenzufassen, **dadurch gekennzeichnet, dass** graphische Symbole (13), die zu Verbindungen eines gleichen Anschlussorgans der Telekommunikationsanlage (1) gehören, in einer ersten örtlichen Beziehung zueinander sowie Symbole (13) von zeitgleichen Verbindungen verschiedener Anschlussorgane in einer zweiten örtlichen Beziehung zueinander auf einer Anzeigefläche (5) darzustellen.

2. Vorrichtung nach Anspruch 1, **dadurch gekennzeichnet, dass** die Anzeigefläche (5) ein Bildschirm ist.

3. Vorrichtung nach Anspruch 1 oder 2, **dadurch gekennzeichnet, dass** die Anzeigefläche (5) in Streifen (12) unterteilt ist, die jeweils der Darstellung von Verbindungen eines bestimmten Anschlussorgans vorbehalten sind.

4. Vorrichtung nach Anspruch 3, **dadurch gekennzeichnet, dass** sie die Position des graphischen Symbols (13) einer Verbindung in Längsrichtung des Streifens (12) in Abhängigkeit von der Zeit des Bestehens der Verbindung festlegt.

5. Vorrichtung nach Anspruch 4, **dadurch gekennzeichnet, dass** sie die Abmessung jedes graphischen Symbols (13) in Längsrichtung des Streifens proportional zur Dauer der Verbindung festlegt.

6. Vorrichtung nach einem der vorhergehenden Ansprüche, **dadurch gekennzeichnet, dass** sie Mittel (6) zum Selektieren eines Symbols (13) durch einen Benutzer aufweist und eingerichtet ist, alle Verbindungsdaten anzuzeigen, die zu einer zum selektierten Symbol (13) gehörenden Verbindung erfasst worden sind.

7. Vorrichtung nach einem der vorhergehenden Ansprüche, **dadurch gekennzeichnet, dass** sie unter anderem Daten von Verbindungsversuchen erfasst, die nicht zu einer Übertragungsverbindung geführt haben.

8. Verfahren zur Unterstützung der Fehlersuche in einer Telekommunikationsanlage mit den Schritten des Erfassens von Verbindungsdaten der Telekommunikationsanlage und des Anzeigens der erfassten Verbindungsdaten, wobei Verbindungsdaten, die zu einer gleichen Verbindung gehören, zu einem einheitlichen graphischen Symbol (13) zusammengefasst und die Symbole (13) auf einer Anzeigefläche (5) dargestellt werden, **dadurch gekennzeichnet, dass** die Darstellung von graphischen Symbolen (13), die zu Verbindungen eines gleichen Anschlussorgans der Telekommunikationsanlage (1) gehören, in einer ersten örtlichen Beziehung zueinander und von Symbolen, die zu zeitgleichen Verbindungen verschiedener Anschlußorgane gehören, in einer zweiten örtlichen Beziehung zueinander erfolgt.

9. Verfahren nach Anspruch 8, **dadurch gekennzeichnet, daß** die Darstellung von graphischen Symbolen, die zu Verbindungen eines gleichen Anschlußorgans gehören, jeweils innerhalb eines Streifens (12) der Anzeigefläche (5) erfolgt.

10. Verfahren nach Anspruch 9, **dadurch gekennzeichnet, daß** die Position und/oder die Abmessung des graphischen Symbols (13) in Längsrichtung des Streifens (12) in Abhängigkeit von der Zeit des Bestehens der Verbindung beziehungsweise ihrer Dauer festgelegt wird.

11. Verfahren nach einem der Ansprüche 8 bis 10, **dadurch gekennzeichnet, daß** die Darstellung aller erfaßten Daten einer Verbindung nach der Auswahl des Symbols (13) der Verbindung durch einen Benutzer erfolgt.

12. Verfahren nach einem der Ansprüche 8 bis 11, **dadurch gekennzeichnet, daß** die Symbole von Verbindungen (13',14'), die in einem kausalen Zusammenhang stehen, jeweils mit einem gemeinsamen Merkmal dargestellt werden.

## Claims

1. A device to support troubleshooting in a telecommunications switching system, comprising means for detecting call data of the telecommunications switching system and means for displaying the detected call data, the displaying means (4) being configured to combine call data belonging to the same call into a common graphical icon (13), **characterized in that** the graphical icons (13) belonging to calls of the same connection element of the telecommunications switching system (1) are displayed on a display area (5) in a first local relation to each other and the icons (13) of simultaneous calls of different connection elements, in a second local relation to each other.

2. The device of claim 1, **characterized in that** the display area (5) is a monitor.

3. The device of claim 1 or 2, **characterized in that** the display area (5) is split up into bars (12), each of said bars being reserved for the display of calls of a particular connection element.

4. The device of claim 3, **characterized in that** it fixes the position of the graphical icon (13) of a call in longitudinal direction of the bar (12) as a function of the time of existence of the call.

5. The device of claim 4, **characterized in that** it fixes the dimension of each graphical icon (13) in longitudinal direction of the bar (12) in proportion to the duration of the call.

6. The device of any of the preceding claims, **characterized in that** it includes means (6) for the selection of a icon (13) by a user and that it is configured to display all call data detected for a call associated with the selected icon (13).

7. The device of any of the preceding claims, **characterized in that** it detects among others data of call attempts which did not result in a transmission call.

8. A method to support troubleshooting in a telecommunications switching system, comprising the steps of detecting call data of the telecommunications switching system and of displaying the detected call data, call data belonging to the same call being combined into a common graphical icon (13) and the icons (13) being represented on a display area (5), **characterized in that** graphical icons (13) belonging to calls of the same connection element of the telecommunications switching system (1) are displayed in a first local relation to each other and icons belonging to simultaneous calls of different connection elements, in a second local relation to each other.

9. The method of claim 8, **characterized in that** graphical icons (13) belonging to calls of the same connection element are displayed in each case within one bar (12) of the display area (5).

10. The method of claim 9, **characterized in that** the position and/or dimension of the graphical icon (13) is fixed in longitudinal direction of the bar (12) as a function of the time of existence of the call and of the latter's duration, respectively.

11. The method of any of claims 8 to 10, **characterized in that** the display of all detected data of a call is effected after selection of the icon (13) by a user.

12. The method of any of claims 8 to 11, **characterized in that** the icons of calls (13', 14') having a causal connection with each other are in each case displayed with a common feature.

## Revendications

1. Dispositif pour assister la recherche d'erreur dans une installation de télécommunication, comprenant des moyens pour saisir de données de connexion de l'installation de télécommunication et des moyens pour afficher les données de connexion saisies, les moyens d'affichage (4) étant configurés pour combiner les données de connexion appartenant à la même connexion, dans un icône graphique (13) commun, **caractérisé en ce que** les icônes graphiques (13) appartenant à des connexions du même organe de raccordement de l'installation de télécommunication (1) sont affichés sur un surface d'affichage (5) dans un premier rapport local l'un à l'autre et les icônes (13) de connexions simultanées d'organes de raccordement différents, dans un second rapport local l'un à l'autre.

2. Dispositif selon la revendication 1, **caractérisé en ce que** la surface d'affichage (5) est un moniteur.

3. Dispositif selon la revendication 1 ou 2, **caractérisé en ce que** la surface d'affichage (5) est partitionnée en barres (12), chacune des dites barres étant réservée pour l'affichage de connexions d'un organe de raccordement particulier.

4. Dispositif selon la revendication 3, **caractérisé en ce qu'**il fixe la position de l'icône graphique (13) d'une connexion en sens longitudinal de la barre (12) en fonction du temps d'existence de la connexion.

5. Dispositif selon la revendication 4, **caractérisé en ce qu'**il fixe la dimension de chaque icône graphique (13) en sens longitudinal de la barre (12) proportionnellement à la durée de la connexion.

6. Dispositif selon l'une quelconque des revendications précédentes, **caractérisé en ce qu'**il comprend des moyens (6) pour la sélection d'un icône (13) par un utilisateur et qu'il est configuré pour afficher toutes les données de connexion saisies pour une connexion appartenant à l'icône (13) sélectionné.

7. Dispositif selon l'une quelconque des revendications précédentes, **caractérisé en ce qu'**il saisit, entre outre, les données de tentatives de connexion qui n'ont pas résulté en une connexion de transmission.

8. Procédé pour assister la recherche d'erreur dans une installation de télécommunication, comprenant les pas de saisie de données de connexion de l'installation de télécommunication et de l'affichage des données de connexion saisies, des données de connexion appartenant à la même connexion, étant combinées dans un icône graphique (13) commun et les icônes (13) étant représentés sur un surface d'affichage (5), **caractérisé en ce que** les icônes graphiques (13) appartenant à des connexions du même organe de raccordement sont affichés dans un premier rapport local l'un à l'autre et les icônes appartenant à des connexions simultanées d'organes de raccordement différents sont affichés dans un second rapport local l'un à l'autre.

9. Procédé selon la revendication 8, **caractérisé en ce que** des icônes graphiques (13) appartenant à des connexions du même organe de raccordement sont affichés à chaque fois à l'intérieur d'une barre (12) de la surface d'affichage (5).

10. Procédé selon la revendication 9, **caractérisé en ce que** la position et/ou la dimension de l'icône graphique (13) est fixée en sens longitudinal de la barre (12) en fonction du temps d'existence de la connexion, respectivement de la durée de cette dernière.

11. Procédé selon l'une quelconque des revendications 8 à 10, **caractérisé en ce que** l'affichage de toutes les données saisies d'une connexion est effectué après la sélection de l'icône (13) par un utilisateur.

12. Procédé selon l'une quelconque des revendications 8 à 11, **caractérisé en ce que** les icônes de connexions (13', 14') ayant une liaison causale l'une avec l'autre sont affichés à chaque fois avec un attribut commun.
